# EUROPEAN PATENT APPLICATION

(11) **EP 0 788 929 A1**
(43) Date of publication of application: **13.08.1997**
(21) Application number: 97200248.9
(22) Date of filing: 29.01.1997
(51) Int. Cl.: B60R 16/02

(54) **Communication system for data transmission in a control device of a car**

(30) Priority: 12.02.1996 NL 1002307
(71) Applicant: APPLIED POWER INC., Butler Wisconsin 53007 (US)
(72) Inventor: Wind, Roelof Jan, 7609 MD Almelo (NL); Joossink, Gerrit Jan, 7481 BT Haaksbergen (NL)
(74) Representative: van der Arend, Adrianus G.A., Ir.

(57) **Abstract**

Communication system for data transmission in a control device of a car, in which the control device comprises a main unit (1) and a number of actuators (5, 6) connected thereto, and the main unit receives input signals from signal transmitters of the car, and drives the actuators on the basis thereof. Each actuator (5, 6) is connected to an associated slave unit (3, 4) which is disposed at a distance from the main unit (1). The main unit is connected by way of a serial communication connection (12, 13) to each slave unit, for the purpose of sending messages from the main unit to slave units. Each slave unit is assigned its own individual address for the slave unit and a group address applying for several slave units. An individual message contains an individual address and data. A group message contains a group address and data. Each slave unit has a data buffer. When a slave unit receives a first type of individual message with the individual address of the slave unit, the slave unit processes the data of the message immediately, in order to drive, in accordance with such data, one or more actuators belonging to the slave unit. When a slave unit receives a second type of individual message with the address of the slave unit, it stores the data of the message in the data buffer. When the slave unit receives a group message with a group address assigned to the slave unit, it releases the data stored in the data buffer and the slave unit and, in accordance with the data released from the data buffer and the data from the group message, drives one or more actuators belonging to the slave unit.

## Description

The invention relates to a communication system for data transmission in a control device of a car, in which the control device comprises a main unit and a number of actuators connected thereto, and the main unit receives input signals from signal transmitters of the car, and drives the actuators on the basis thereof.

A communication system of the abovementioned type is known in practice for a roof control device of a convertible. In the case of the known system the main unit receives measurement signals from components of the car, concerning the speed of the car for example, and command signals which can be generated by a user of the car for opening or closing the roof of the car. Depending on the signals received, the main unit drives actuators, which generally consist of valves of a hydraulic system of the control device and relays of the control device to which motors to be driven in two directions can be connected. The communication between the main unit and the actuators is by way of a large number of wires, with each individual actuator to be driven having its own wire. The disadvantage of this is that for each configuration of a roof control device, whether or not for the same type of car, a separate appropriate wiring configuration has to be designed and installed in the car. This makes designing, installing and modifying the electrical part of the roof control device complicated and expensive, which can be a hindrance as regards the ability or wish to use different or modified embodiments of the mechanical part of the roof control device.

Another disadvantage of the known communication system is that when a break occurs in a wire between the main unit and an actuator, the main unit indicates this defect only if the main unit is monitoring the relevant control output of the main unit as regards the load thereon during the activation (activation flank). After the activation (i.e. after the activation flank), the system cannot detect a wire break. If the main unit does not detect a wire break, while there is one, the system continues to drive the defective configuration, with the risk of damage to the roof control device and/or the car. In this connection, it should also be pointed out that as the number of signal wires between the main unit and the actuators increases, the chance of wire breakage in the group of wires also increases. Moreover, finding and repairing a wire break becomes more difficult as the number of said signal wires increases. The abovementioned risk of damage to the roof control device and/or to the car also exists with regard to the occurrence of a fault in an actuator which is not detected by the main unit.

The object of the invention is to eliminate the abovementioned disadvantages.

This object is achieved through the fact that the communication system of the type mentioned in the preamble according to the invention is characterized in that each actuator is connected to an associated slave unit which is disposed at a distance from the main unit, the main unit is connected by way of a serial communication connection to each slave unit, for the purpose of sending messages from the main unit to slave units, each slave unit is assigned its own individual address for that slave unit and a group address applying for several slave units, an individual message contains an individual address and data, a group message contains a group address and data, each slave unit has a data buffer, a slave unit on receipt of a first type of individual message with the individual address of the slave unit processes data of the message immediately, in order to drive, in accordance with such data, one or more actuators belonging to the slave unit, a slave unit on receipt of a second type of individual message with the address of the slave unit stores the data of the message in the data buffer, a slave unit on receipt of a group message with a group address assigned to the slave unit and with certain data releases the data stored in the data buffer, and the slave unit, in accordance with the data released from the data buffer and the data from the group message, drives one or more actuators belonging to the slave unit.

Thus, the wiring between the main unit and the slave units provided for the actuators is reduced to a universal bundle of wires or bus with a limited number of wires for each control device. A control device is consequently very simple to design, install in the car and subsequently modify if necessary. The costs involved are correspondingly low. The communication system can be applied for several different types of control, which possibly operate in concert. For example a roof control device which, in addition, monitors and controls the windows to safe positions when controlling the roof. Then, if the roof control is idle, the driver can control the roofs through the communication system. Other types of control may involve active wheel suspension control, seat position control, anti-theft blocking control and door lock control.

Due to the fact that the data transmitted by a main unit for driving actuators is first stored in the data buffer if necessary and released or validated only following receipt of a suitable group message, the validation of such buffered data can be used simultaneously for several slave units of the same group, which ensures that the activations or deactivations of actuators desired by the main unit take place simultaneously - which in some situations is advantageous for preventing possible damage to the control device, especially a roof control device and/or to other car components in cases where activation or deactivation of actuators is not simultaneous - immediately after receipt of a message from the main unit.

Other features and advantages of the invention will emerge from the explanation which follows with reference to the drawings, in which:
Fig. 1 shows a block diagram of a communication system for data transmission in a control device of a car according to the invention; and
Fig. 2 shows the format of two messages belonging together which are sent by way of a signal line of the communication system of Fig. 1 between two units.

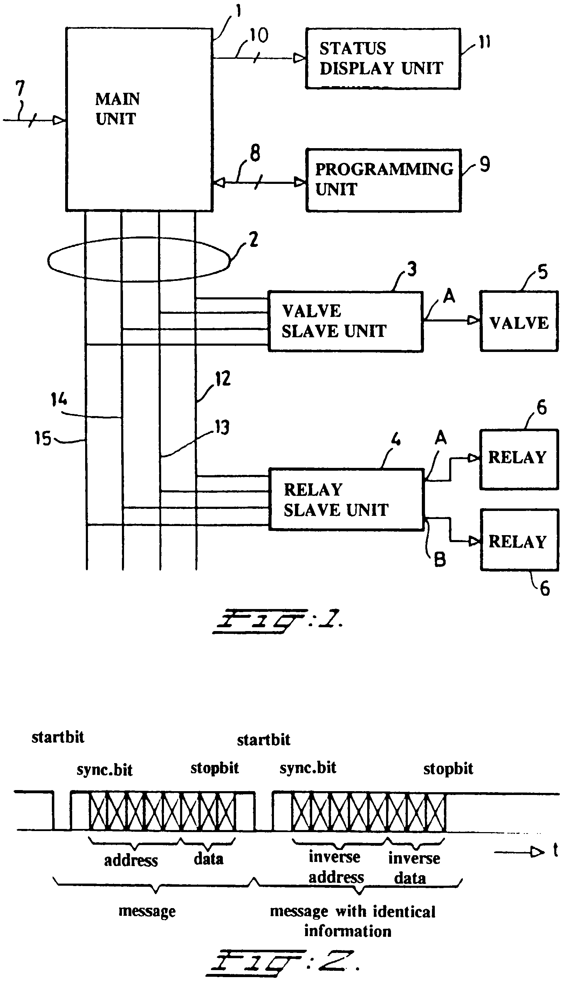

The communication system shown in Fig. 1 for data transmission in a control device of a car according to the invention comprises a main unit 1, which is connected by way of a bundle of wires or bus 2 to slave units 3, 4.

In this description of the drawings the control device is, for example, a roof control device of a convertible and the slave units comprise a group of valve slave units 3 and a group of relay slave units 4. For the sake of clarity, Fig. 1 shows only one valve slave unit 3 and one relay slave unit 4. A valve slave unit 3 has an output A, and a relay slave unit has two outputs A and B. In a realized embodiment, which will be explained below with reference to Fig. 2 and the tables below, each group comprises fourteen units, each slave unit being addressable by means of five address bits.

A slave unit 3, 4 receives control information by way of the bus 2 from the main unit 1, for the purpose of driving one or more actuators connected to the outputs A, B of the slave unit 3, 4. In the case of a valve slave unit 3 the actuator connected thereto is a valve 5 of a hydraulic system of the roof control device. In the case of a relay slave unit 4 the actuators connected thereto are relays 6. The relays can be connected to a motor of the roof control device which can be driven by means of the relays so that it turns in a chosen direction.

The main unit 1 receives, by way of another bundle of wires 7, signals from components of the car, for example concerning the speed of the car, and command signals which can be generated by a user of the car for opening or closing the roof.

By way of another bundle of wires 8 the main unit 1 can also be permanently connected to a programming unit 9, by means of which, as explained later, an initial address of a programmable slave unit 3, 4 can be programmed to an individual address. If there is a permanent connection between the main unit 1 and the programming unit 9, the main unit 1 and the programming unit 9 can be regarded as a single unit.

By way of a bundle of wires 10 the main unit 1 can also be connected to a status display unit 11 for displaying to the user of the car or to the user of the programming unit the status of one or more parts of the communication system and/or of the roof control device. In the case of the status display unit 11 also, if the connection between said unit and the main unit is permanent, these two units can be regarded as a single unit.

The main bundle of wires 2 of the communication system consists of four wires, each connected to the main unit 1 and to each slave unit 3, 4. The bundle 2 comprises a signal wire 12, a signal earth wire 13, a supply wire 14 and a supply earth wire 15. In some cases, for example depending on the type of actuators used, a single earthing wire will suffice if necessary.

Fig. 2 shows the format of a message sent by way of the signal wire 12 (and the signal earth wire 13) from the main unit 1 to a slave unit 3, 4, or from a slave unit 3, 4 to the main unit 1. The signal of a message is binary. In the rest position the signal wire 12 has a high level. A message comprises eleven bits, consisting of in succession: a start bit with a low level, a clock synchronization bit with a high level, five address bits A1 to A5, three data bits D1 to D3, and a stop bit with a high level. In order to be more certain that the message has been properly received by the intended receiver, the information is repeated in a second message sent immediately after this (first) message. The information, in other words the address and the data present therein, of the second message is preferably inverted relative to the information in the first message. This improves the possibility of error detection, for example in cases where the chance of a level change during transmission from high to low is not the same as the chance of a level change from low to high.

Each slave unit 3, 4 has an address register in which an individual address assigned to the slave unit is stored, a group address register in which an address of a group of slave units to which the slave unit belongs is stored, an address buffer for storing the address present in a message received, and a data buffer for storing the data present in the message received. The slave unit has identical buffers for the address, whether or not inverse, and the data, whether or not inverse, of a repeated message belonging to the same transmission by the main unit 1. If the buffered address is the same as an address in the address register, the message received is intended for the slave unit 3, 4 with this address, and the slave unit 3, 4 could process the data received by means of these messages in order to drive the corresponding actuator 5 or actuators 6. The storage of an individual or group address in an address register and comparison thereof with an address received, and the circuits required therefor, are part of the prior art, and the implementation thereof is considered within the capacities of a person skilled in the art. Implementation is possible, for example, by means of separate components, such as Universal Asynchronous Receiver Transmitters (UARTs), registers and comparators, or on the basis of a microprocessor system in which the desired functions are realized by means of a program. Implementation is also possible by means of an Application Specified Integrated Circuit (ASIC), which circuits are obtainable in various basic forms, and by means of which persons skilled in the art can realize in various ways the functions of the invention which have been explained and those yet to be explained. The applicant realized the slave units 3, 4 by means of an ASIC.

If the slave unit recognizes its individual address in the two messages received in succession, it sends - as explained later - one or more messages containing its own address by way of the signal wire 12 back to the main unit 1, so that the main unit 1 is at least certain that the information sent has been received by the intended receiver. If the main unit 1 receives no response within a time interval of a predetermined duration, it undertakes a fault action, which can consist of suitably driving the status display unit 11 and sending suitable messages by way of the bus 2 to one or more other slave units, so that the roof control device is taken into a safe position. For actively detecting any defects in the communication system, the main unit 1 can be programmed in such a way that it individually addresses the slave units 3, 4 connected to the main unit 1 within each of successive time intervals for a predetermined duration and, in accordance with what has been explained above, awaits a suitable response, explained below, and if it does not receive such a response, applies the abovementioned fault action. Each slave unit 3, 4 can also be designed in such a way that if the slave unit 3, 4 receives no message of any kind with any address within the abovementioned (or another) predetermined time, it drives the actuators connected thereto into a safe operating state. The abovementioned predetermined duration can be selected between 150 ms and 350 ms, and is preferably 250 ms.

With the signal format with five address bits per message shown in Fig. 2, 32 slave units could be addressed individually. However, according to the invention, a number of addresses are reserved for other purposes.

Two of the 32 possible addresses according to the invention are group addresses, i.e. a group address belonging to the group of valve slave units 3 and a group address belonging to the group of relay units 4. Further, two of the 32 possible addresses are reserved as initial address of a reserve valve slave unit 3 and of a relay slave unit 4 respectively. The table below gives the definition of addresses of messages which are sent by the main unit. It will be clear that if there is a greater number of available address bits, the invention can be used in an identical manner for more individual addresses of slave units, possibly more groups of types of slave units, and accordingly more initial addresses of reserve slave units.

**TABLE 1**

| ADDRESS DEFINITION OF MESSAGE FROM MAIN UNIT TO SLAVE UNIT | | |
|---|---|---|
| BINARY A5...A1 | DECIMAL | DESCRIPTION |
| 00000 | 0 | initial address of reserve valve unit |
| 00001 | 1 | individual address of valve unit 1 |
| ... | ... | ... |
| 01110 | 14 | individual address of valve unit 14 |
| 01111 | 15 | group address of valve units |
| 10000 | 16 | initial address of reserve relay unit |
| 10001 | 17 | individual address of relay unit 1 |
| ... | ... | ... |
| 11110 | 30 | individual address of relay unit 14 |
| 11111 | 31 | group address of relay units |

The messages with an individual address (decimal 1 to 14 and 17 to 30) sent by a main unit will be called individual messages. The messages with a group address (decimal 15 or 31) sent by the main unit will be called group messages. The messages sent by the main unit with an initial address (0 or 16) of a reserve slave unit with a programmable individual address will be called address programmable messages. As will be seen later, an address programmable message can be regarded as a special individual message.

Table 2 below gives a definition of the data of an individual message, consisting of the data bits D1, D2 and D3.

**TABLE 2**

| DATA DEFINITION OF INDIVIDUAL MESSAGE | | |
|---|---|---|
| DATA BIT | BIT VALUE | DESCRIPTION |
| D1 | 0 | put received control data in data buffer (release only after relevant group message) |
| | 1 | activate new control data immediately |
| D2 | 0 | new control data: deactivate valve or relay at output A |
| | 1 | new control data: activate valve or relay at output A |
| D3 | 0 | new control data: deactivate relay at output B |
| | 1 | new control data: activate relay at output B |

Data bit D1 of an individual message can be regarded as an indication of the type of data of the individual message. Depending on the value of the data bit D1, the remaining data D2, D3 is in fact used by the slave unit 3, 4 addressed, in order to drive, whether or not immediately, the one or more actuators 5, 6 connected to the slave unit 3, 4 respectively. If the data bit D1 has the value "1", the slave unit 3, 4 addressed is taken into a state in which it immediately deactivates or activates the actuator or actuators 5, 6 connected thereto, in accordance with the values of the data bits D2, D3, and as shown in Table 2. If the data bit D1 has the value "0", the values of the data bits D2, D3 are stored temporarily in a data buffer of the slave unit. Only after receipt of a group message whose address is the group address of the group to which the slave unit 3, 4 addressed belongs, and depending on the values of the data bits D1, D2 and D3, for which according to Table 3 below three combinations are reserved, one or both values of the data bits D2, D3 of the individual message sent earlier to said slave unit are released to drive the actuator 5, 6 connected thereto.

For the release of the buffered values of the data bits D2 and D3 of the individual message sent earlier, the combinations of binary values of the data bits D3, D2, D1 (in this order) "001", "010" and "011" of a group message are used. By this method it is possible to selectively activate or to deactivate different actuators of different groups at the same time, i.e. in synchronism. This can be advantageous for carrying out a number of functions of the control of the roof of the car, because this method avoids, for example, a less good performance of the functions, or even damage to the control device or to the car. Since a function can consist of activation or deactivation of a number of actuators and these actuators must each be addressed individually by means of an individual message and, as explained below, the main unit after sending an individual message for checking purposes awaits a return message with the same address, it is also ensured by this method that functions are not executed while one or more relevant actuators 5, 6 or slave units 3, 4 are faulty and have not satisfactorily reacted to an individual message. If the main unit in such a case does not then send one of the three abovementioned group messages which are intended for release of buffered control data, this can ensure that control functions which involve several possibly faulty actuators are not executed.

**TABLE 3**

| DATA DEFINITION OF GROUP MESSAGE | | | |
|---|---|---|---|
| DATA BITS | | | DESCRIPTION |
| D3 | D2 | D1 | |
| 0 | 0 | 0 | validation of reprogramming of initial address (00000 or 10000) of reserve slave unit |
| 0 | 0 | 1 | release of buffered new state for output B |
| 0 | 1 | 0 | release of buffered new state for output A |
| 0 | 1 | 1 | release of buffered new states of both outputs A and B |
| 1 | 0 | 0 | deactivate output A and B immediately |
| 1 | 0 | 1 | deactivate output A and activate output B immediately |
| 1 | 1 | 0 | activate output A and deactivate output B immediately |
| 1 | 1 | 1 | activate output A and activate output B immediately |

As can be seen from the last four lines of Table 3, it is also possible by means of a group message to drive one or more outputs of the slave units 3, 4 of a particular group of slave units selectively, but in the same way for the entire group, in other words, to deactivate or to activate the actuators of the entire group connected to outputs A, B immediately. This can be useful for executing specific functions of the control of the roof. However, it can also be important in the event of the main unit detecting a communication error or a fault in one or more slave units 3, 4 and/or actuators 5, 6, so that damage can be prevented from occurring to the roof control device or to the car.

If the data of the group message is "000", this -as will be explained later - does not relate to the release of data values buffered in the data buffer of a slave unit or to the immediate driving of actuators belonging to a group of slave units, but relates to reprogramming of an initial address (decimal 0 or 16) of a programmable reserve slave unit to an individual address (decimal 1-14 or 17-30).

Whenever a slave unit 3, 4 receives an individual message with an individual address which is the same as the individual address assigned to the slave unit 3, 4, after the predetermined number of messages with corresponding information content has been received from the main unit 1, said slave unit sends a return message to the main unit 1. Table 4 below gives a definition of such a return message. The address which the slave unit 3, 4 incorporates in the return message corresponds (whether or not inverted) to the address of the slave unit. The data incorporated by this slave unit 3, 4 in the return message gives an indication of the status of the slave unit 3, 4 and of the activity of the actuators 5, 6 connected to the slave unit 3, 4. Preferably it relates to the status immediately preceding or during the receipt of the individual message to which the slave unit is currently reacting by sending out a return message. If the main unit 1 does not receive a return message in response to an individual message sent out, it decides that a communication error, for example as a result of a wire break in the bus 2, has occurred, and will then execute a suitable fault action. The fault action can consist of driving the status display unit 11, in order to give an acoustic and/or optical fault message to the user of the car. The fault action can also consist of sending out one or two group messages, in order to drive actuators 5, 6 of slave units 3, 4, which may actually have a good communication facility with the main unit 1, so that they are taken immediately into a specific safe state. The fault action can also consist of total interruption of the supply to the actuators 5, 6 and to any other electrical components, for example motors of the roof control device.

**TABLE 4**

| DATA DEFINITION OF RETURN MESSAGE | | |
|---|---|---|
| DATA BIT | BIT VALUE | DESCRIPTION |
| D1 | 0 | no error in slave unit |
| | 1 | error in slave unit |
| D2 | 0 | valve or relay on output A is inactive |
| | 1 | valve or relay on output A is active |
| D3 | 0 | relay on output A is inactive |
| | 1 | relay on output B is active |

A slave unit can be designed, in the same way as the main unit 1, to send out repeatedly a predetermined number of times a message sent out by the unit with or without inverted information content. For the main unit 1, this increases the reliability over the connection to a slave unit 3, 4 addressed by the main unit 1, the reliability of proper functioning of the slave unit 3, 4 and, inherent therein, the reliability of the information of a return message, or indicates a faulty communication through the fact that a faulty slave unit wrongly sends out a return message in response to a message sent by the main unit 1 or by a slave unit 3, 4 simultaneously with the return message from another slave unit. On the basis of this functioning, the main unit 1 can also detect correct or faulty functioning of the communication system and of the parts thereof and take a suitable fault action if necessary.

In order to replace a faulty slave unit 3, 4, it is possible according to the invention to use a reserve slave unit which is initially programmed with an initial address which is the same for all reserve slave units of the group of slave units concerned, but which can be changed from the main unit 1 and by way of the bus 2 into a desired individual address after replacement in the control device. Since, if only one reserve unit is being fitted in the control device at a time, the initial address can be regarded as an individual address, the new address will be called the new individual address after programming. Where a reserve slave unit is mentioned in the description and in the claims, this can also mean an additional slave unit which, provided that one is added at a time to the control device, extends the configuration of the control device. If desired, the control device could therefore be composed solely of such reserve or additional slave units if they are fitted in succession in the configuration and are provided with their own new individual address.

For reprogramming of the initial address of a reserve slave unit, the main unit 1 sends out a predetermined number of address programming messages, each containing an address which is the same as the initial address of the reserve slave unit. Since in the illustrated example only two groups of slave units are present, in order to limit the abovementioned predetermined number of address programming messages, one bit, namely address bit A5, is preprogrammed permanently into the slave unit 3, 4. For a reserve valve slave unit 3, A5 = "0", and for a reserve relay slave unit 4, A5 = "1". This corresponds to the address definition of Table 1. This means that the predetermined number of address programming messages, indicated in Table 5 below, can remain limited to five or a multiple thereof if the earlier explained repetition of transmitted messages is applied.

**TABLE 5**

| DATA DEFINITION OF ADDRESS PROGRAMMING MESSAGE | | |
|---|---|---|
| DATA BIT | BIT VALUE | DESCRIPTION |
| D2, D1 | 00 | message concerns new individual address bit A1 |
| | 01 | message concerns new individual address bit A2 |
| | 10 | message concerns new individual address bit A3 |
| | 11 | message concerns new individual address bit A4 |
| D3 | 0 | the new address bit concerned must be given value 0 |
| | 1 | the new address bit concerned must be given value 1 |

As can be seen from Table 5, the data bits D1 and D2 of an address programming message indicate the new individual address bit this address programming message concerns and the value which must be given to this address bit according to data bit D3 of this address programming message. The value of the new individual address bit is stored temporarily in an address buffer. After all required address programming messages have been sent by the main unit 1, and the main unit 1 has received return messages in response thereto, the main unit 1 sends a group message with an address corresponding to the group to which the reserve slave unit just provisionally programmed belongs, and the data of which according to Table 3 has the binary value "000". By means of the last-mentioned group message, the four address bits A1-A4 of the new individual address of the reserve slave unit stored in the address buffer are released, and stored in the normal address register of the slave unit and are thereby validated as the new individual address of the slave unit which the main unit 1 has to use from now on for addressing the slave unit.

Although the data buffer of a slave unit need comprise only three bits and the address buffer must comprise four bits, a single buffer can be used with suitable programming of the slave unit and/or suitable configuration of logical ports.

Table 6 below gives a definition of the data of return messages sent by a reserve slave unit during reprogramming of its initial address, in response to respective address programming messages received. Unlike the data definition of return messages sent by a slave unit shown in Table 4, during an address reprogramming of a reserve slave unit, if there is proper communication and proper functioning of the slave unit, a return message does actually contain entirely the same information as the address programming message received and to which the reserve slave unit is responding. The only difference from the corresponding address programming message is that the interpretation of the information by the reserve slave unit and the main unit 1 is different. In an address programming message the information relates to a command, and in a return message in response thereto the information relates to a planned action.

**TABLE 6**

| DATA DEFINITION OF RETURN MESSAGE DURING ADDRESS PROGRAMMING | | |
|---|---|---|
| DATA BIT | BIT VALUE | DESCRIPTION |
| D2, D1 | 00 | message concerns new individual address bit A1 |
| | 01 | message concerns new individual address bit A2 |
| | 10 | message concerns new individual address bit A3 |
| | 11 | message concerns new individual address bit A4 |
| D3 | 0 | the new address bit concerned must be given value 0 (after validating group message with data 000) |
| | 1 | the new address bit concerned must be given value 1 (after validating group message with data 000) |

An embodiment of a communication system for data transmission in a roof control device of a car (convertible) has been described above. The essence of the communication system consists of a bus connection between a main unit 1 fitted in the car and slave units 3, 4 which are fitted at a distance therefrom and are equipped for immediate driving of actuator 5 or actuators 6 connected to the slave unit concerned, or for delayed driving of actuators 5 or actuators 6 connected to the slave unit 3, 4. An important aspect of the invention therefore relates to the way in which the communication by way of the bus connection takes place. Therefore it will be understood that the communication system according to the invention is not limited to be used with a roof control device, but can be appleid for several different types of control, which possibly operate in concert. For example a roof control device which, in addition, monitors and controls the windows to safe positions when controlling the roof. Then, if the roof control is idle, the driver can control the roofs through the communication system. Other types of control may involve active wheel suspension control, seat position control, anti-theft blocking control and door lock control.

The exchange of messages relating thereto is explained in detail with reference to Tables 1 to 6. After reading thereof, a person skilled in the art will have no great difficulty in designing the main unit 1 and the slave units 3, 4 using known components, either by means of combinatorial circuits without program control, or by using circuits working with program control, or by a combination of such circuits. Such circuits, for example UARTs (Universal Asynchronous Receiver Transmitters), logical ports, microprocessors, registers or buffers or memories and ASICs (Application Specified Integrated Circuits) are well known, and can be combined and/or programmed without any great difficulty by a person skilled in the art, certainly after the above detailed explanation, for executing the explained functions of the communication system according to the invention, so that a detailed explanation of the physical implementation of the main unit 1 and the slave units 3, 4 would not make any essential contribution to the explanation of the invention, and has therefore been omitted.

## Claims

1. Communication system for data transmission in a control device of a car, in which the control device comprises a main unit (1) and a number of actuators (5, 6) connected thereto, and the main unit (1) receives input signals from signal transmitters of the car, and drives the actuators (5, 6) on the basis thereof, **characterized in that** each actuator (5, 6) is connected to an associated slave unit (3, 4) which is disposed at a distance from the main unit (1), the main unit is connected by way of a serial communication connection (12, 13) to each slave unit, for the purpose of sending messages from the main unit to slave units, each slave unit is assigned its own individual address (A1-A5) for that slave unit and a group address (A1-A5) applying for several slave units, an individual message contains an individual address and data (D1-D3), a group message contains a group address and data (D1-D3), each slave unit has a data buffer, a slave unit on receipt of a first type of individual message with the individual address of the slave unit processes data of the message immediately, in order to drive, in accordance with such data, one or more actuators belonging to the slave unit, a slave unit on receipt of a second type of individual message with the address of the slave unit stores the data of the message in the data buffer, a slave unit on receipt of a group message with a group address assigned to the slave unit and with certain data releases the data stored in the data buffer, and the slave unit, in accordance with the data released from the data buffer and the data from the group message, drives one or more actuators belonging to the slave unit.

2. Communication system for data transmission in a control device of a car according to claim 1, **characterized in that** the main unit within each of successive time intervals of a specific duration sends a message at least once for one or more slave units, and if such a message is not received within the interval of the specific duration following the last receipt of such a message by the slave unit, the slave unit drives the corresponding actuators to a state which is safe for the control device.

3. Communication system for data transmission in a control device of a car according to claim 2, **characterized in that** the time interval has a duration of between 150 ms and 350 ms.

4. Communication system for data transmission in a control device of a car according to one of the preceding claims, **characterized in that** a slave unit on receipt of an individual message with the individual address of the slave unit sends back a return message, with the individual address of the slave unit and status information relating to the state of the slave unit and/or of actuators belonging to the slave unit, by way of the serial connection.

5. Communication system for data transmission in a control device of a car according to claim 4, **characterized in that** the information on one or more actuators sent back by the slave unit relates to the situation of the actuators immediately preceding the individual message last received by the slave unit.

6. Communication system for data transmission in a control device of a car according to one of the preceding claims, **characterized in that** after sending a message a unit sends the message with the same information content, formed by an address and data, at least once again, the receiving unit for which these messages are intended checks that the information contents of the messages are identical and, if they are found not to be identical, applies a fault action.

7. Communication system for data transmission in a control device of a car according to claim 6, **characterized in that** the information content of a message is presented in binary form, and the unit inverts the binary value of the information content of a repeated message relative to the message sent immediately preceding it.

8. Communication system for data transmission in a control device of a car according to one of the preceding claims, **characterized in that** the data of a group message can indicate on the basis of data previously stored in the data buffer which of the actuators belonging to a slave unit has/have to be driven by the slave unit.

9. Communication system for data transmission in a control device of a car according to one of the preceding claims, **characterized in that** the data of a group message can indicate whether one or more of the actuators belonging to a slave unit has/have to be driven immediately to a specific state, irrespective of the data stored in the data buffer.

10. Communication system for data transmission in a control device of a car according to one of the preceding claims, **characterized in that** the data of a series of successive messages with an initial address from a programmable slave unit represents a new individual address for the slave unit.

11. Communication system for data transmission in a control device of a car according to claim 10, **characterized in that** one bit of the initial address has a value which is assigned to one of two types of slave unit groups, and this bit is programmed permanently into the slave unit.

12. Communication system for data transmission in a control device of a car according to claim 10 or 11, **characterized in that** the programmable slave unit on receipt of individual messages with the initial address and data for a new individual address for the slave unit stores the new individual address temporarily in an address buffer, the slave unit sends back an identical message to the main unit, the main unit compares the new individual address sent by the main unit with the new individual address received back by the main unit in response to this transmission and, if they are identical, sends a group message with suitable data for validation of the new individual address stored in the address buffer of the slave unit by storage thereof in an address register of the slave unit.

13. Communication system for data transmission in a control device of a car according to claim 12, **characterized in that** if as the result of the comparison the main unit finds non-identity, the main unit applies a fault action and restarts the reprogramming cycle.

14. Communication system for data transmission in a control device of a car according to claim 12 or 13, **characterized in that** the data buffer and the address buffer are formed by a single buffer.

15. Communication system for data transmission in a control device of a car according to one of claims 10 to 14, **characterized in that** the main unit checks a reprogramming of an individual address by sending out an individual message with the new individual address and by comparing that address with the address which is present in a return message subsequently sent by a slave unit.

16. Communication system for data transmission in a control device of a car according to one of the preceding claims, **characterized in that** the slave units are divided into a group of slave units (3) which are each designed to drive a corresponding valve (5) of a hydraulic system of the roof control device and a group of slave units (4) which are each designed to drive two corresponding relays (6) of the roof control device.

17. Communication system for data transmission in a control device of a car according to claim 16, **characterized in that** the relays (6) can be driven individually or both simultaneously depending on the data of a message received by the corresponding slave unit (4).

18. Communication system for data transmission in a control device of a car according to claim 16 or 17, **characterized in that** a corresponding group message with its own group address is assigned to each group of slave units (3, 4).

19. Communication system for data transmission in a control device of a car according to claim 16, 17 or 18, **characterized in that** each group of slave units (3, 4) has assigned to it its own initial address from a programmable slave unit of the group.
